Europäisches Patentamt

European Patent Office

Office européen des brevets

(19)

(11) Publication number: **0 228 670**

**A2**

(12) # EUROPEAN PATENT APPLICATION

(21) Application number: 86117666.7

(51) Int. Cl.⁴: **B60C 29/00**

(22) Date of filing: 18.12.86

(30) Priority: 06.01.86 JP 612/86 U

(43) Date of publication of application:
15.07.87 Bulletin 87/29

(84) Designated Contracting States:
FR GB IT

(71) Applicant: **Kawasaki Jukogyo Kabushiki Kaisha**
**1-1 Higashikawasaki-cho 3-chome**
**Chuo-ku Kobe-shi Hyogo-ken(JP)**

(72) Inventor: **Miki, Kazuo**
**13-5, Takaoka 2-chome Okubo-cho**
**Akashi-shi Hyogo-ken(JP)**

(74) Representative: **Klunker . Schmitt-Nilson . Hirsch**
**Winzererstrasse 106**
**D-8000 München 40(DE)**

(54) **An air filling valve for motor cycle tubeless wheels.**

(57) An air filling valve (4) for motor cycle tubeless wheels composed of the rim formed integrally with the angularly equally spaced, hollow spokes is disclosed, which is mounted in one of the spokes (2) adjacent to the rim (I) to extend in a direction substantially perpendicular to the radial direction of the wheel (3), so that connection of the plug of a tire inflator hose to the inlet opening of the valve is achieved with increased ease, without the enlarged diameter of the disk (IO) standing in the way as in the case of those conventional air filling valves mounted to project in a radial direction on the rims.

F I G . I

EP 0 228 670 A2

## An air filling valve for motor cycle tubeless wheels

The invention relates to an air filling valve for motor cycle tubeless wheels composed of their rim formed integrally with the hollow spokes.

Air filling valves permit the connection of a tire inflator plug to inject compressed air to inflate the tire.

Tubeless wheels in which the rims are made integrally with the hollow spokes for two-wheeled vehicles are known. FIGURES 3 and 4 illustrate one typical such wheel 3 which comprises a rim I and three hollow spokes 2 constructed integrally with the rim. The hollow inside the spokes 2 is provided to reduce wheel weight. The wheel 3 is also equipped with an air filling valve 4 in the internal periphery of the rim I to enable the injection of air to inflate the wheel tire. In the prior art, such valves are usually poised to extend in a direction parallel with the radial direction of the wheel 3.

In recent years, these motor cycles began to be equipped with a disk brake whose disk is generally made large in diameter to enhance braking performance. As may best be depicted in FIGURE 4, a disk brake consists of a disk I0 placed between calipers II. Due to the increased size of the disk I0, the calipers II stands to come close, with their outer periphery, to the air filling valve 3, to the great inconvenience of the job of connecting to the inlet opening of the valve 3 the plug of a tire inflator air supply hose to inject compressed air into the tire.

The invention as claimed is intended to remedy the above-mentioned difficulties. It solves the problems by providing an air filling valve which is mounted in one of the plural hollow spokes to stand in a direction substantially parallel with the axis of the wheel.

The features offered by the invention are mainly that the air filling valve can provide easier way of connecting the plug of an air inflator to inject compressed air into the tire, since it projects in a direction for readily approach for the job.

One way of carrying out the invention is described in detail below with reference to drawings which illustrate only one specific embodiment, in which:

FIGURE I is a front view of an air filling valve in accordance with the present invention;

FIGURE 2 is a sectional view taken along the line II-II of FIGURE I;

FIGURE 3 is a front view of the conventional air filling valve; and

FIGURE 4 is a sectional view taken along the line IV-IV of FIGURE 3.

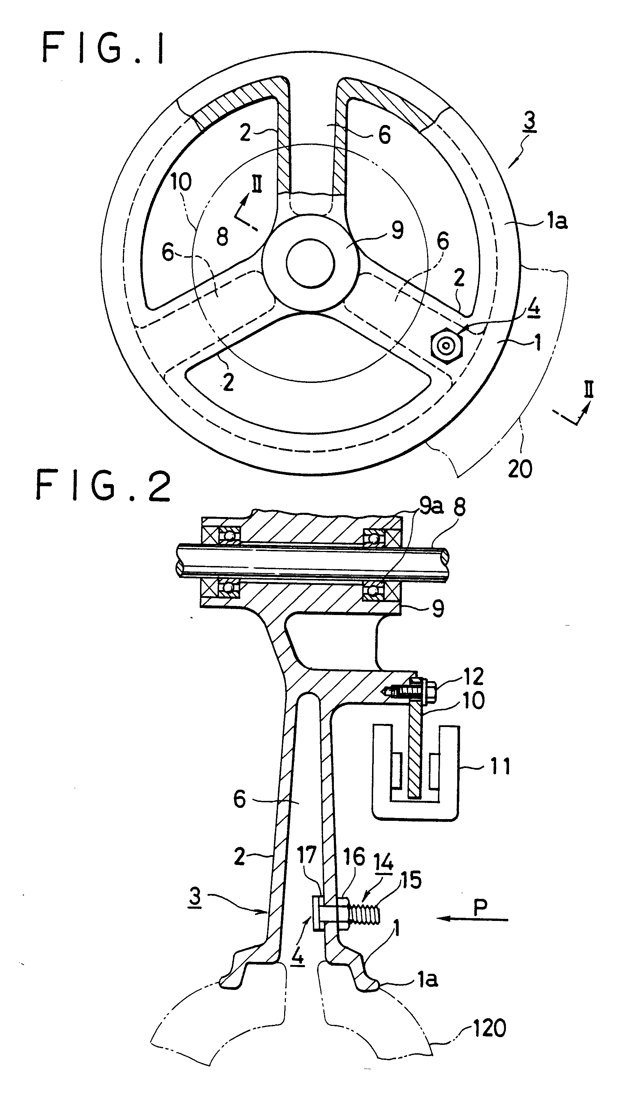

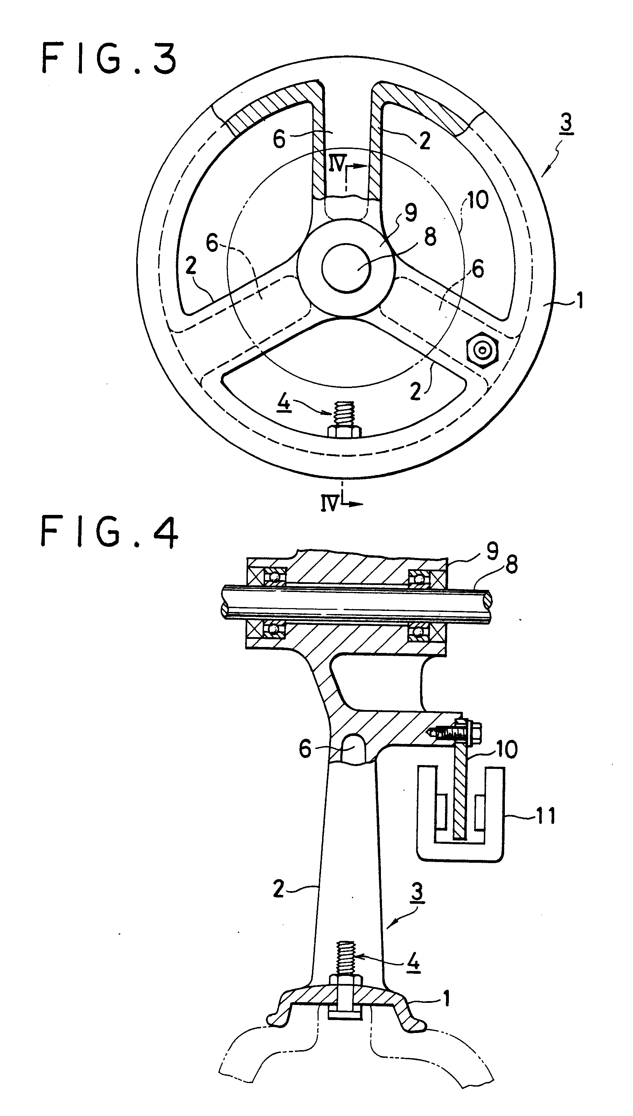

FIGURES I and 2 show a tubeless wheel 3 for two-wheeled vehicles comprising an annular rim I of largely U-shaped cross-section with a lip portion Ia formed along the edge of the rim on each side to hold the tire in position. Three spokes 2 are angularly equally spaced and formed integrally with the rim I. The spokes 2 are hollow inside and the hollow inside 6 opens in each junction with which the spokes are joined to the rim I. The wheel 3 has a hub 9 in the center with which the spokes 2 are also made integral with their inner most end. As may best be shown in FIGURE 2, the hub 2 carries an axle 8 with the intermediacy of bearings 9a. Externally of the hub 9 is mounted a disk I0, secured in place with a bolt I2 to the hub 9. A pair of calipers II enclose the disk I0 to constitute a disk brake for the wheel. The caliper assembly II is built to move inwardly to clamp the disk I0 from both sides to brake a rotating hub 9, when a brake lever, not shown, which is operatively connected to the caliper assembly II, is actuated.

An air filling valve 4 comprises a valve core I4 having at an external end thereof a threaded portion I5, a ring seal I7, and a nut I6 for tightening to the threaded portion I5, and has an inlet opening through which compressed air is injected to inflate the tire. The valve 4 is mounted in such a manner to extend in a direction substantially parallel with the axis of the wheel 3, preferably at a point adjacent to the rim I, in one of the spokes 2.

## Claims

I. An air filling valve for motor cycle tubeless wheels comprised of their rims formed integrally with the angularly equally spaced, hollow spokes, characterized in that the valve (4) is mounted in one of the plural hollow spokes (2) at a point adjacent to the rim (I) to extend in a direction substantially perpendicular to the radial direction of the wheel (3).

# FIG.1

# FIG.2

# FIG.3

# FIG.4